# EUROPÄISCHE PATENTSCHRIFT

(11) **EP 0 456 788 B1**
(45) Veröffentlichungstag und Bekanntmachung des Hinweises auf die Patenterteilung: **03.11.1993**
(21) Anmeldenummer: 90917475.7
(22) Anmeldetag: 05.12.1990
(51) Int. Cl.: D21D 5/16, D21D 5/06, B01D 39/10

(54) **SIEB FÜR DRUCKSORTIERER FÜR FASERSUSPENSIONEN**
SIEVE FOR A PRESSURE SORTING DEVICE FOR FIBRE SUSPENSIONS
TAMIS POUR TRIEUSE SOUS PRESSION POUR SUSPENSIONS FIBREUSES

(30) Priorität: 06.12.1989 DE 3940334
(43) Veröffentlichungstag der Anmeldung: 21.11.1991
(73) Patentinhaber: Hermann Finckh Maschinenfabrik GmbH & Co., D-72793 Pfullingen (DE)
(72) Erfinder: CZERWONIAK, Erich, D-7417 Pfullingen (DE)
(74) Vertreter: Hoeger, Stellrecht & Partner
(86) Internationale Anmeldenummer: DE9000942
(87) Internationale Veröffentlichungsnummer: WO9108338

(56) Entgegenhaltungen:
- EP-A- 0 286 535
- US-A- 4 717 471

## Beschreibung

Die Erfindung betrifft ein Sieb für Drucksortierer für Fasersuspensionen, welche einen insbesondere einer Einlapseite des Siebs benachbarten Rotor zur Erzeugung positiver und negativer Druckstöße in der Fasersuspensionen aufweisen, wobei das Sieb eine zu einer Siebachse rotationssymmetrische Gestalt aufweist.

Bei der Aufbereitung von Fasersuspensionen werden in der Regel mehrere derartige Drucksortierer hintereinandergeschaltet, wobei die Sieböffnungen der hintereinandergeschalteten Drucksortierer immer kleiner werden, d.h. die Sieböffnungen der einem ersten Drucksortierer nachgeschalteten Drucksortierer sind immer kleiner als die Sieböffnungen des vorausgehenden Drucksortierers. Auf diese Weise werden Verunreinigungen und Faserzusammenballungen in Abhängigkeit von ihrer Größe stufenweise von den brauchbaren Fasern abgetrennt, da jedem Drucksortierer der sogenannte Gutstoff des vorausgehenden Drucksortierers zugeführt wird (beim Gutstoff handelt es sich um denjenigen Teil der Fasersuspension, der die Sieböffnungen eines Drucksortierers passiert hat).

Von der Papierindustrie werden Geräte immer größerer Leistung gefordert; dies bedeutet für Drucksortierer, daß nicht nur eine immer höhere spezifische Durchsatzleistung gefordert wird (Menge der Fasersuspension, welche pro Zeiteinheit eine Siebfläche bestimmter Größe passiert), sondern daß eine bestimmte Sortierfeinheit mit immer weniger hintereinandergeschalteten Drucksortierern erreichbar sein soll, was sich nur mit relativ feinen Sieböffnungen erreichen läßt, welche jedoch der Erhöhung der Durchsatzleistung entgegenstehen.

Zur Erhöhung der Durchsatzleistung wurden deshalb nicht nur neue Rotorformen entwickelt, sondern es wurde auch die Umfangsgeschwindigkeit der der Einlaßseite des Siebs benachbarten Rotorbereiche gesteigert, um in der Fasersuspension relativ hohe positive und negative Druckstöße und Turbulenzen zu erzeugen - durch die Druckstöpe soll ein Zusetzen der Sieböffnungen durch in der Fasersuspension enthaltene Verunreinigungen verhindert werden (an den Sieböffnungen treten Rückspüleffekte auf), und durch die Turbulenzen soll verhindert werden, daß die Fasern an der Einlapseite des Siebs eine Art Faservlies bilden, welches die Durchsatzleistung verringert oder ein Hindurchtreten brauchbarer Fasern durch die Sieböffnungen ganz verhindert. Die Maßnahmen zur Erhöhung der Durchsatzleistung (Erhöhung der Rotordrehzahl bzw. der Rotorumfangsgeschwindigkeit, aber auch Erhöhung der am Sieb auftretenden Druckdifferenz) führen jedoch dazu, daß die auf das Sieb einwirkenden Kräfte immer größer werden und sie bewirken oft eine rasche Zerstörung des Siebs, insbesondere infolge von im Siebblech auftretenden Rissen. Zur Erreichung höherer Standzeiten, d.h. zur Erzielung widerstandsfähigerer Siebe, hat man deshalb die Wandstärke der Siebe vergrößert; durch diese Maßnahme verlängern sich aber auch die von den Sieböffnungen gebildeten Durchflußkanäle, eine Folge, die sich negativ auf die Durchsatzleistung des Drucksortierers auswirkt. Des weiteren hat die Forderung nach immer leistungsfähigeren Geräten nicht nur dazu geführt, daß ein Drucksortierer pro Stunde immer gröpere Fasersuspensionsmengen verarbeiten soll, sondern daß er auch Fasersuspensionen höherer Stoffdichte (Faseranteil je Volumeneinheit) verarbeiten soll, und vor allem bei Fasersuspensionen relativ hoher Stoffdichte führen verhältnismäpiß lange Sieböffnungskanäle zu hohen Druckverlusten zwischen Einlaß- und Auslaßseite des Siebs, welche wiederum ein rasches Verstopfen der Sieböffnungen zur Folge haben.

Es sind nun schon die vielfältigsten Vorschläge für die Gestaltung der Siebwand solcher Siebe gemacht worden:

In der US-PS 3,581,903 der Anmelderin wurde vorgeschlagen, bei einem Sieb mit schlitzförmigen Sieböffnungskanälen in die Auslaßseite der Siebwand für jede Sieböffnung eine schiffchenförmige Ausnehmung einzufräsen und ein solches Sieb in einen Drucksortierer einzubauen, bei dem der Rotor der Auslaßseite des Siebs benachbart umläuft. Durch diese Maßnahme wird zwar die Gefahr eines Verstopfens der Sieb-Öffnungen durch in der Fasersuspension enthaltene Verunreinigungen erheblich vermindert, bei solchen Drucksortierern besteht jedoch die Gefahr, daß sich in der zu sortierenden Fasersuspension auf der Einlapseite des Siebs ein Faservlies oder dergleichen ausbildet, welches die Durchsatzleistung drastisch vermindert.

In der DE-AS 27 50 499 wird ein Sieb für Drucksortierer vorgeschlagen, welches aus in Richtung der Siebachse aufeinandergeschichteten ringförmigen Segmenten zusammengesetzt ist, deren jedes einen Kranz schlitzförmiger Sieböffnungskanäle aufweist und von denen jeweils zwei einander benachbarte Segmente Kränze von Ausnehmungen definieren, die sich von der Einlap- bzw. der Auslapseite des Siebs bis zu den Sieböffnungskanälen erstrecken und sich auf die letzteren zu verjüngen. Ein solches Sieb besitzt zwar in Durchstömrichtung relativ kurze Sieböffnungskanäle und es ist außerordentlich widerstandsfähig gegen hohe, von einem Rotor erzeugte Druckstöße, es ist jedoch in der Herstellung außerordentlich aufwendig und kann das Entstehen eines Faservlieses auf der Einlaßseite des Siebs nicht besonders wirksam verhindern.

Ähnliches gilt für das in der EP-0 093 187-B der Anmelderin offenbarte Sieb; dieses ist auf der Einlaßseite mit in Siebumfangsrichtung um das ganze Sieb herum verlaufenden Nuten und auf der Siebauslaßseite mit gefrästen, kreiszylindrischen Ausnehmungen versehen, deren Zentren in den Schnittpunkten eines von gleichseitigen Dreiecken gebildeten Netzes liegen und deren Bodenflächen vom Grund der Nuten durchbrochen werden. Der Sinn dieser Siebgestaltung ist im wesentlichen derselbe wie bei dem Sieb nach der vorstehend diskutierten US-PS 3,581,903, d.h. durch die kreiszylindrischen Ausnehmungen werden die von den Sieböffnungen gebildeten Durchflußkanäle in Durchströmrichtung erweitert. Auf der anderen Seite läßt sich auch bei dieser Siebgestaltung das Entstehen eines Faservlieses auf der Einlapseite nicht besonders wirksam verhindern.

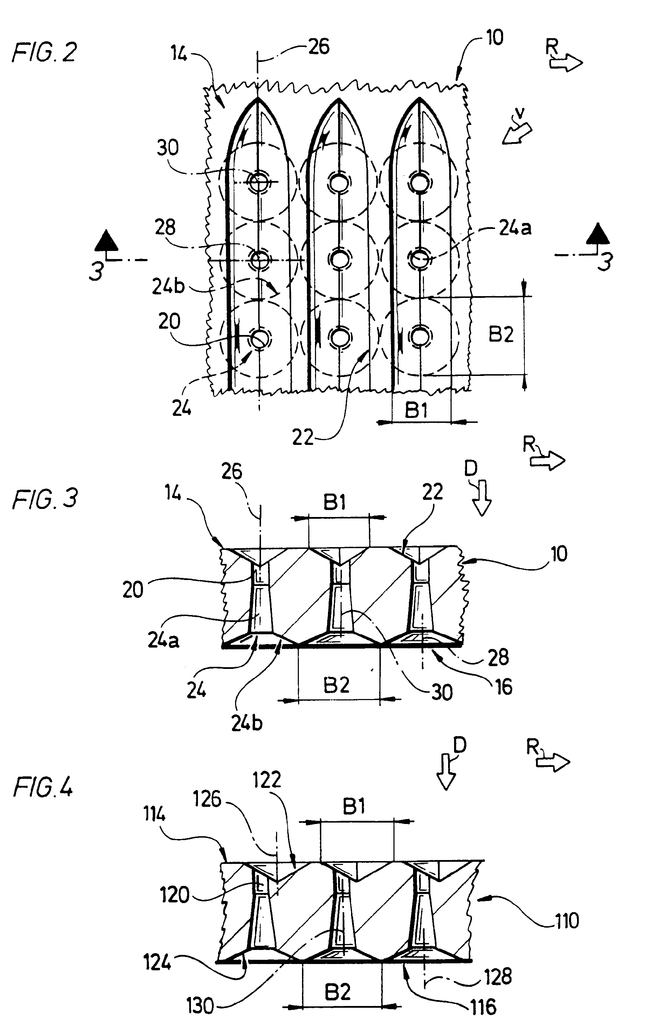

Aus der EP-0042742-B ist ein Sieb für Drucksortierer bekannt geworden, welche einen einer Einlapseite des Siebs benachbarten Rotor aufweisen, wobei das Sieb eine zu einer Siebachse rotationssymmetrische Gestalt aufweist und die über ihre Wandstärke einstückige Siebwand mit die Siebeinlaßseite mit der Siebauslaßseite verbindenden Sieböffnungskanälen sowie an ihrer Einlaßseite mit Ausnehmungen versehen ist, in die die Sieböffnungskanäle münden. Bei einer ersten Ausführungsform des bekannten Siebs haben die Sieböffnungskanäle die Gestalt von sich quer zur Siebumfangsrichtung erstreckenden Schlitzen und die einlaßseitigen Ausnehmungen die Form von schiffchenförmigen Ausnehmungen, die in das Siebblech hineingefräst sind und ebenfalls quer zur Siebumfangsrichtung verlaufen, wobei für jeden Sieböffnungskanal eine solche schiffchenförmige Ausnehmung vorgesehen ist (Fig. 2 bis 4 der EP-0042742-B). Bei einer zweiten Ausführungsform dieses bekannten Siebs handelt es sich bei den Sieböffnungskanälen um kreiszylindrische Bohrungen, deren jeder eine kegelstumpfförmige Ausnehmung zugeordnet ist, die in die Einlaßseite des Siebs mündet und sich zu dieser hin mit einem verhältnismäßig kleinen Öffnungswinkel erweitert (Fig. 5 und 6). Durch die einlaßseitigen Ausnehmungen soll eine Erhöhung der Durchsatzleistung des Drucksortierers erzielt werden, was darauf zurückzuführen sein soll, daß diese einlaßseitigen Ausnehmungen zusammen mit dem auf der Einlaßseite umlaufenden Rotor zu Turbulenzen führen, welche dem Entstehen eines Faservlieses auf der Einlaßseite des Siebs entgegenwirken. Bei beiden Ausführungsformen des bekannten Drucksortierers ist aber eine nicht befriedigende Durchsatzleistung festzustellen, ganz abgesehen davon, daß es recht aufwendig ist, nicht nur die einzelnen schlitzförmigen Sieböffnungskanäle, sondern auch noch für jeden einzelnen Sieböffnungskanal eine schiffchenförmige Ausnehmung zu fräsen bzw. bei der zweiten Ausführungsform auf der Siebeinlaßseite für jeden einzelnen Sieböffnungskanal eine kegelstumpfförmige Ausnehmung herzustellen.

Schließlich ist aus der WO 87/03024 ein Drucksortierer mit kreiszylindrischem Sieb bekannt, bei dem die Siebeinlaßseite mit der Siebauslaßseite verbindende, als kreiszylindrische Bohrungen ausgebildete Sieböffnungskanäle in an der Siebeinlaßseite und der Siebauslaßseite vorgesehene nutförmige, zueinander parallele und quer zur Siebumfangsrichtung verlaufende Ausnehmungen münden, wodurch die Effizienz des Siebs verbessert werden soll. Durch die Maßnahmen wird zwar der Druckverlust am Sieb vermindert, weil die engen Sieböffnungskanäle - relativ zur Siebwandstärke - verhältnismäßig kurz sind, die bekannte Siebkonstruktion hat jedoch einen gravierenden Nachteil: Die nutförmigen, sich quer zur Siebumfangsrichtung erstreckenden einlaß- und auslaßseitigen Ausnehmungen führen zur Bildung von Schwächungslinien der Siebwand, die parallel zur Siebzylinderachse und damit zu den Mantellinien des Siebzylinders verlaufen, so daß es nicht nur problematisch ist, aus einem fertig bearbeiteten Siebblech durch Biegen einen absolut rotationssymmetrischen Siebzylinder herzustellen, sondern diese Schwächungslinien führen auch zu dem Risiko von Dauerbrüchen der Siebwand aufgrund der von einem Rotor erzeugten Druckstöße.

Der Erfindung lag nun die Aufgabe zugrunde, ein dauerhaftes, d. h. ein eine hohe Standfestigkeit aufweisendes Sieb für mit einem Rotor versehene Drucksortierer zu schaffen, welches sich relativ einfach herstellen und mit dem sich eine spezifisch hohe Durchsatzleistung erzielen läßt.

Ausgehend von einem Sieb für Drucksortierer, welche einen insbesondere einer Einlaßseite des Siebs benachbarten Rotor zur Erzeugung positiver und negativer Druckstöpe in der Fasersuspension aufweisen, wobei das Sieb eine zu einer Siebachse rotationssymmetrische Gestalt aufweist und die über ihre Wandstärke einstückige Siebwand sowohl an ihrer Einlaß- als auch an ihrer Auslaßseite mit Ausnehmungen versehen ist, welche durch Sieböffnungskanäle miteinander verbunden sind, wobei sich jede der einlaßseitigen Ausnehmungen über mehrere Sieböffnungskanäle erstreckt und als quer zur Siebumfangsrichtung verlaufende Nut ausgebildet ist und wobei die größte Breite der auslaßseitigen Ausnehmungen, gemessen in der auslaßseitigen Siebwandoberfläche, mindestens so groß ist, wie die gröpte Breite der einlaßseitigen Nuten, läßt sich diese Aufgabe erfindungsgemäß durch eine solche Siebgestaltung lösen, daß sich jede der auslaßseitigen Ausnehmungen nur über jeweils einen der Sieböffnungskanäle erstreckt. Im Falle schlitzförmiger Sieböffnungskanäle können die auslaßseitigen Ausnehmungen insbesondere so ausgebildet sein, wie dies die US-PS 3 581 903 zeigt, d. h. es kann sich um schiffchenförmige Ausnehmungen handeln. Bevorzugt werden jedoch Ausführungsformen, bei denen die Sieböffnungskanäle Bohrungen sind und die auslaßseitigen Ausnehmungen die Gestalt kegelstumpfförmiger, insbesondere flachkegeliger Ansenkungen aufweisen.

Die sowohl an der Einlaß- als auch an der Auslaßseite des Siebs vorgesehenen Ausnehmungen erlauben es, für die Herstellung erfindungsgemäßer Siebe verhältnismäßig dicke Bleche zu verwenden, ohne daß relativ enge bzw. feine Sieböffnungskanäle zu hohen Druckverlusten am Sieb führen und einer hohen Durchsatzleistung des Drucksortierers entgegenstehen, da durch die beiderseits vorgesehenen Ausnehmungen die Länge der Sieböffnungskanäle beträchtlich vermindert wird. Im Gegensatz zu dem aus der EP-0042742-B bekannten Sieb muß auch nicht für jeden Sieböffnungskanal eine gesonderte einlaßseitige Ausnehmung hergestellt werden. In Verbindung mit einem an der Einlaßseite des Siebs umlaufenden Rotor führen die auf der Einlaßseite vorgesehenen nutförmigen Ausnehmungen zu den gewünschten Turbulenzen in der zu sortierenden Fasersuspension, wodurch der Gefahr der Bildung von Faseransammlungen an der Siebeinlaßseite wirksam begegnet wird. Die verhältnismäßig großen auslaßseitigen Ausnehmungen führen in Verbindung mit den vom Rotor erzeugten negativen Druckstößen zu einem kräftigen Rückspüleffekt, so daß die Sieböffnungskanäle nicht verstopft werden können. Durch die sich nur über jeweils einen Sieböffnungskanal erstreckenden auslaßseitigen Ausnehmungen wird schließlich die Bildung von Schwächungslinien in der Siebwand vermieden, vor allem dann, wenn die Sieböffnungskanäle nicht schlitzförmig ausgebildet sind und die auslaßseitigen Ausnehmungen die Form von Ansenkungen haben.

Besonders bevorzugt werden Ausführungsformen, bei denen die einlapseitigen Nuten flach, insbesondere maximal ungefähr 1 mm tief sind, da Nuten einer solchen Tiefe für die Erzeugung der gewünschten Turbulenzen ausreichen und die Siebwand nicht nennenswert schwächen. Hingegen empfiehlt sich für die auslaßseitigen Ausnehmungen eine verhältnismäßig große Tiefe von mehr als der Hälfte der Dicke der Siebwand; da jedem Sieböffnungskanal eine gesonderte auslaßseitige Ausnehmung zugeordnet ist, schwächen diese Ausnehmungen trotz ihrer relativ großen Tiefe die Siebwand nicht in unzulässiger Weise, obwohl sie zu den angestrebten kurzen Sieböffnungskanälen führen. Besonders vorteilhaft sind Verhältnisse, wie sie in den beigefügten Ansprüchen 5 bis 8 näher angegeben sind.

Damit das Sieb langfaserige Verunreinigungen besser abweist, ist es schließlich empfehlenswert, die einlaßseitigen Nuten gegenüber den Achsen der Sieböffnungskanäle in Rotordrehrichtung versetzt anzuordnen; dadurch wird außerdem die Gefahr eines Verstopfens der Sieböffnungen noch weiter verringert.

Bezüglich der Dimensionierung der Ausnehmungen ist zu beachten, daß diese einerseits so groß sein sollen, daß die Strömungsgeschwindigkeit im Bereich der Ausnehmungen so gering wird, daß auch bei verhältnismäßig groper Stoffdichte die Reibungsverluste vernachläpißbar klein werden, daß aber andererseits die Siebwand durch die Ausnehmungen nicht so stark geschwächt wird, daß die erforderliche Festigkeit des Siebs nicht mehr gewährleistet wäre.

Weitere Vorteile, Merkmale und Einzelheiten der Erfindung ergeben sich aus der beigefügten zeichnerischen Darstellung und der nachfolgenden Beschreibung zweier bevorzugter Ausführungsformen des erfindungsgemäßen Siebs; in der Zeichnung zeigen:
- Fig. 1:: Einen Schnitt längs einer Durchmesserebene durch eine erste Ausführungsform des erfindungsgemäßen Siebs, welche die Gestalt eines Kreiszylinders be- sitzt;
- Fig. 2:: eine Ansicht eines Teils der Siebwand des Siebs gemäß Fig. 1, gesehen in Richtung des Pfeils "D" in Fig. 1 (Ansicht auf die Einlapseite des Siebs);
- Fig. 3:: einen Schnitt nach der Linie 3-3 in Fig. 2, und
- Fig. 4:: eine der Fig. 3 entsprechende Darstellung der zweiten Ausführungsform des erfindungsgemäßen Siebs.

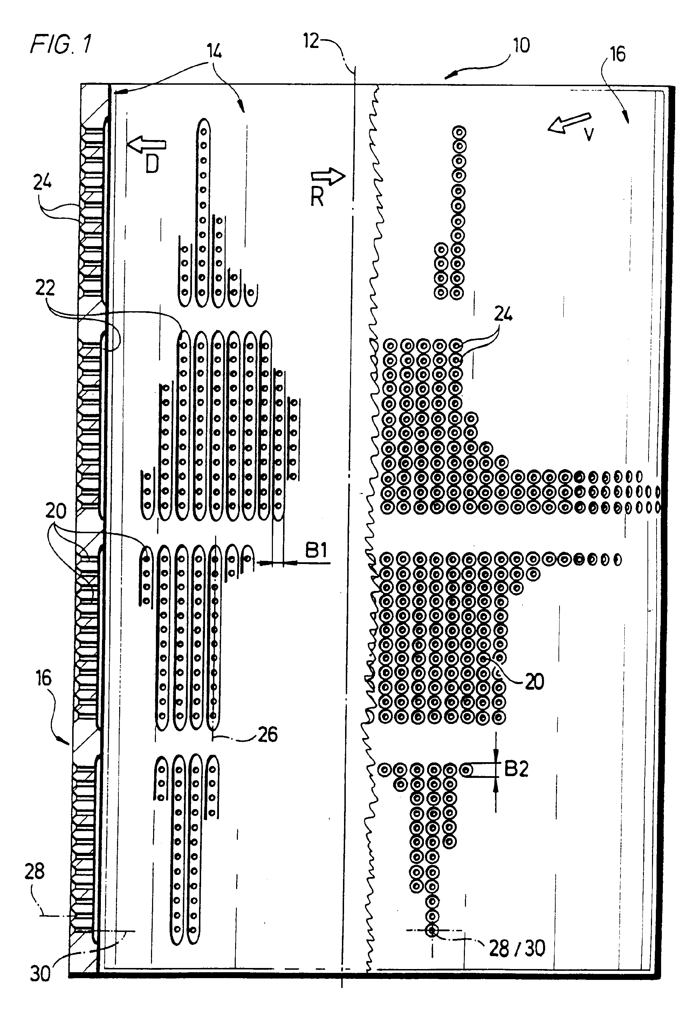

Das in den Fig. 1 bis 3 gezeigte Sieb besitzt eine aus einem Metallblech hergestellte Siebwand 10, die zu einem Kreiszylinder gebogen wurde; dieses Sieb ist für Drucksortierer bestimmt, bei denen die zu sortierende Fasersuspension in das Innere des von der Siebwand 10 gebildeten Siebzylinders eingeleitet wird und welche einen Rotor aufweisen, dessen Rotationsachse mit der Achse 12 des Siebzylinders zusammenfällt. Ein derartiger Drucksortierer ist z. B. in der EP-0042742-B beschrieben und dargestellt. Da die zu sortierende Fasersuspension dem Sieb in der Regel von oben zugeführt wird und da der Rotor die zu sortierende Fasersuspension an der Einlaßseite des Siebs in Umlauf versetzt, bewegt sich die zu sortierende Fasersuspension schraubenlinienförmig von oben nach unten der Einlaßseite der Siebwand 10 entlang, was in Fig. 1 durch den Pfeil "v" angedeutet wurde. Die Einlaßseite des Siebs wurde mit 14, die Auslaßseite mit 16 bezeichnet. Die Richtung, in der die Fasersuspension das Sieb passiert, wurde in den Fig. 1 bis 4 mit dem Pfeil "D" gekennzeichnet.

Wie sich aus den Fig. 1 bis 3 ergibt, sind in die Siebwand 10 Sieböffnungskanäle 20 eingearbeitet, welche bei der dargestellten bevorzugten Ausführungsform aus einer zylindrischen Bohrung 20 bestehen. Die Sieböffnungskanäle 20 sind, wie sich deutlich aus Fig. 1 ergibt, in der Siebwand 10 erfindungsgemäß in Gruppen angeordnet, wobei jede Gruppe eine Reihe von in Richtung der Achse 12 hintereinander liegenden Sieböffnungskanälen 20 bildet. Für jede dieser Gruppen ist in die Einlaßseite 14 der Siebwand 10 eine erste Ausnehmung 22 eingefräst, wobei alle diese Ausnehmungen in der Draufsicht ungefähr schiffchenförmig sind, einen dreieckigen Querschnitt besitzen und so eine Nut bilden, deren Breite mit B1 bezeichnet wurde. Außerdem verlaufen alle diese Nuten parallel zueinander und parallel zur Siebzylinderachse 12.

Erfindungsgemäß ist in die Siebauslaßseite 16 der Siebwand für jeden Sieböffnungskanal 20 eine Ausnehmung 24 eingearbeitet, die sich erfindungsgemäß aus einer konischen Bohrung 24a und einer flachkegeligen Ansenkung 24b zusammensetzt, welche sich beide in Durchströmrichtung D erweitern. An der auslaßseitigen Siebwandoberfläche ist die Breite bzw. der Durchmesser der Ausnehmungen 24, nämlich die Breite B2, erfindungsgemäß gleich oder größer als die Breite B1.

Bei einem bevorzugten Sieb beträgt die Dicke der Siebwand 10 ca. 8 mm, die Nuten 22 sind nur 1 mm tief, und die Länge der Sieböffnungskanäle 20, gemessen in Durchströmrichtung D, beträgt lediglich ca. 0,5 mm, so daß die Tiefe der Ausnehmungen 24 bzw. 24a, 24b ca. 6,5 mm beträgt.

Bei der Ausführungsform nach den Fig. 1 bis 3 liegen die Achsen 28 der auslaßseitigen Ausnehmungen 24 und die Achsen 30 der Sieböffnungskanäle 20 in der Mittelebene 26 der einlaßseitigen Ausnehmungen 22, d. h. bei dieser Ausführungsform ist kein Versatz der Ausnehmungen und der Sieböffnungskanäle in Drehrichtung "R" des nicht dargestellten Rotors vorgesehen.

Diesbezüglich unterscheidet sich die zweite Ausführungsform nach Fig. 4 von der ersten Ausführungsform. In Fig. 4 sind die Siebwand mit 110, deren Einlaßseite mit 114 und deren Auslaßseite mit 116 bezeichnet, die gleichfalls schiffchenförmigen, einlaßseitigen Ausnehmungen mit 122 und die gleichfalls als Kombination konischer Bohrungen und flachkegeliger Ansenkungen ausgebildeten auslaßseitigen Ausnehmungen mit 124, die die Ausnehmungen miteinander verbindenden Sieböffnungskanäle mit 120, deren Achsen mit 130, die Mittelebenen der einlaßseitigen Ausnehmungen mit 126 und die Achsen der auslaßseitigen Ausnehmungen mit 128. Die Fig. 4 zeigt, daß bei dieser Ausführungsform nach einem weiteren Merkmal der Erfindung die Mittelebenen 126 der einlaßseitigen Ausnehmungen 122 in Drehrichtung "R" des nicht dargestellten Rotors gegenüber den Achsen 130 der Sieböffnungskanäle 120 versetzt sind, während die Achsen 128 der auslaßseitigen Ausnehmungen 124 mit den Achsen 130 der Sieböffnungskanäle 120 zusammenfallen. Der Versatz der einlaßseitigen Ausnehmungen 122 ist, wie in Fig. 4 gezeigt, so gewählt, daß die - in Drehrichtung "R" des nicht dargestellten Rotors gesehen - ansteigende Seitenwand der nutförmigen Ausnehmungen 122 erst hinter den Sieböffnungskanälen 120 beginnt.

Durch den Verlauf der nutförmigen einlaßseitigen Ausnehmungen 22 bzw. 122 quer zur Anströmgeschwindigkeit v der zu sortierenden Fasersuspension werden an der Einlapseite 14 bzw. 114 der Siebwand Turbulenzen erzeugt, die dem Verstopfen der Sieböffnungen und der Bildung eines Faservlieses auf der Siebeinlaßseite entgegenwirken. Die einlaßseitigen Ausnehmungen 22 bzw. 122 lassen sich in einfacher Weise mittels eines Profilscheibenfräsers in das die Siebwand 10 bzw. 110 bildende Blech einarbeiten, ohne daß dadurch die Festigkeit der Siebwand zu sehr verringert wird.

## Patentansprüche

1. Sieb für Drucksortierer für Fasersuspensionen, welche einen insbesondere einer Einlaßseite (14,114) des Siebs benachbarten Rotor zur Erzeugung positiver und negativer Druckstöße in der Fasersuspension aufweisen, wobei das Sieb eine zu einer Siebachse (12) rotationssymmetrische Gestalt aufweist und die über ihre Wandstärke einstückige Siebwand (10,110) sowohl an ihrer Einlaß- (14,114) als auch an ihrer Auslaßseite (16,116) mit Ausnehmungen (22,122,24,124) versehen ist, welche durch Sieböffnungskanäle (20,120) miteinander verbunden sind, wobei sich jede der einlaßseitigen Ausnehmungen (22,122) über mehrere Sieböffnungskanäle (20,120) erstreckt und als quer zur Siebumfangsrichtung verlaufende Nut ausgebildet ist und wobei die größte Breite (B2) der auslaßseitigen Ausnehmungen (24,124), gemessen in der auslaßseitigen Siebwandoberfläche, mindestens so groß ist wie die größte Breite (B1) der einlaßseitigen Nuten (22,122),
**dadurch gekennzeichnet**, daß sich jede der auslaßseitigen Ausnehmungen (24; 124) nur über jeweils einen der Sieböffnungskanäle (20; 120) erstreckt.

2. Sieb nach Anspruch 1, dadurch gekennzeichnet, daß die einlaßseitigen Nuten (122) gegenüber den Achsen (130) der Sieböffnungskanäle (120) in Rotordrehrichtung (R) versetzt angeordnet sind.

3. Sieb nach Anspruch 1 oder 2, dadurch gekennzeichnet, daß die auslaßseitigen Ausnehmungen (24; 124) kegelstumpfförmige Ansenkungen (24b) aufweisen.

4. Sieb nach Anspruch 3, dadurch gekennzeichnet, daß die auslaßseitigen Ansenkungen (24b) als flachkegelige Ansenkungen ausgebildet sind, deren Kegel an der Spitze im Querschnitt einen Winkel von mindestens 90° bildet.

5. Sieb nach einem oder mehreren der Ansprüche 1 bis 4, dadurch gekennzeichnet, daß die Tiefe der einlaßseitigen Nuten (22; 122) ungefähr ¹/₁₀ bis ungefähr ¹/₅ der Gesamtdicke der Siebwand (10; 110) beträgt.

6. Sieb nach einem oder mehreren der Ansprüche 1 bis 5, dadurch gekennzeichnet, daß die Tiefe der auslaßseitigen Ausnehmungen (24a, 24b) ungefähr ⁴/₅ der Gesamtdicke der Siebwand (10; 110) beträgt.

7. Sieb nach einem oder mehreren der Ansprüche 1 bis 6, dadurch gekennzeichnet, daß die in Durchströmrichtung gemessene Länge der Sieböffnungskanäle (20; 120) höchtens ungefähr ¹/₁₀ der Gesamtdicke der Siebwand (10; 110) beträgt.

8. Sieb nach Anspruch 7, dadurch gekennzeichnet, daß die Länge der Sieböffnungskanäle (20; 120) ca. ⁵/₁₀₀ bis ca. ⁷/₁₀₀ der Gesamtdicke der Siebwand (10; 110) beträgt.

9. Sieb nach einem oder mehreren der vorstehenden Ansprüche, dadurch gekennzeichnet, daß die auslaßseitigen Ausnehmungen (24) jeweils eine sich an den Sieböffnungskanal (20) anschließende, sich in Durchströmrichtung (D) erweiternde konische Bohrung (24a) und eine sich an letztere anscließende Ansenkung (24b) aufweisen.

## Claims

1. Screen for pressure sorters for fibre suspensions comprising a rotor adjacent, in particular, to an inlet side (14, 114) of the screen for generating positive and negative pressure surges in the fibre suspension, said screen having a shape rotationally symmetrical in relation to a screen axis (12), and the screen wall (10, 110) integral throughout its wall thickness being provided on both its inlet (14, 114) and outlet (16, 116) sides with recesses (22, 122, 24, 124) connected to one another by screen opening channels (20, 120), each of said recesses (22, 122) on the inlet side extending over several screen opening channels (20, 120) and being in the form of a groove extending transversely to the circumferential direction of said screen, and the largest width (B2) of said recesses (24, 124) on the outlet side, measured in the screen wall surface on the outlet side, being at least as large as the largest width (B1) of the grooves (22, 122) on the inlet side, characterized in that each of the recesses (24, 124) on the outlet side extends over only one of the screen opening channels (20, 120) respectively.

2. Screen as defined in claim 1, characterized in that the grooves (122) on the inlet side are arranged in offset relation to the axes (130) of the screen opening channels (120) in the direction of rotation (R) of the rotor.

3. Screen as defined in claim 1 or 2, characterized in that the recesses (24, 124) on the outlet side comprise frustoconical countersinks (24b).

4. Screen as defined in claim 3, characterized in that the countersinks (24b) on the outlet side are in the form of flat tapering countersinks, the taper thereof forming at the tip in cross section an angle of at least 90°.

5. Screen as defined in any or several of claims 1 to 4, characterized in that the depth of the grooves (22, 122) on the inlet side is approximately 1/10 to approximately 1/5 of the total thickness of the screen wall (10, 110).

6. Screen as defined in any or several of claims 1 to 5, characterized in that the depth of the recesses (24a, 24b) on the outlet side is approximately 4/5 of the total thickness of the screen wall (10, 110).

7. Screen as defined in any or several of claims 1 to 6, characterized in that the length of the screen opening channels (20, 120) measured in the flow-through direction is at the most approximately 1/10 of the total thickness of the screen wall (10, 110).

8. Screen as defined in claim 7, characterized in that the length of the screen opening channels (20, 120) is approximately 5/100 to approximately 7/100 of the total thickness of the screen wall (10, 110).

9. Screen as defined in any or several of the preceding claims, characterized in that the recesses (24) on the outlet side each comprise a conical bore (24a) adjoining the screen opening channel (20) and widening in the flow-through direction (D) and a countersink (24b) adjoining said bore.

## Revendications

1. Tamis pour trieuses sous pression pour suspensions fibreuses, qui présentent un rotor, voisin en particulier d'un côté d'entrée (14, 114) du tamis, afin de produire des ondes de pression positives et négatives dans la suspension fibreuse, le tamis présentant une forme symétrique en rotation par rapport à un axe (12) et la paroi (10, 110) du tamis, d'une seule pièce sur son épaisseur, étant pourvue d'évidements (22, 122, 24, 124) aussi bien sur son côté d'entrée (14, 114) que sur son côté de sortie (16, 116), lesquels évidements communiquent entre eux par des canaux d'ouverture (20, 120) du tamis, chacun des évidements (22, 122) côté entrée s'étendant sur plusieurs canaux d'ouverture (20, 120) du tamis et étant conçu à la manière d'une rainure s'étendant transversalement à la direction périphérique du tamis et la plus grande largeur (B2) des évidements (24, 124) côté sortie, mesurée dans la surface de la paroi du tamis côté sortie, étant au moins aussi grande que la plus grande largeur (B1) des rainures (22, 122) côté entrée, caractérisé en ce que chacun des évidements (24 ; 124) côté sortie ne s'étend que sur l'un des canaux d'ouverture (20 ; 120) du tamis.

2. Tamis selon la revendication 1, caractérisé en ce que les rainures (122) côté entrée sont décalées par rapport aux axes (130) des canaux d'ouverture (120) du tamis dans le sens de rotation (R) du rotor.

3. Tamis selon les revendications 1 ou 2, caractérisé en ce que les évidements (24 ; 124) côté sortie présentent des chanfreins (24b) tronconiques.

4. Tamis selon la revendication 3, caractérisé en ce que les chanfreins (24b) côté sortie sont des chanfreins coniques plats dont le cône forme à la pointe, dans la section transversale, un angle d'au moins 90°.

5. Tamis selon une ou plusieurs des revendications 1 à 4, caractérisé en ce que la profondeur des rainures (22 ; 122) côté entrée est comprise entre env. 1/10 et env. 1/5 de l'épaisseur totale de la paroi (10 ; 110) du tamis.

6. Tamis selon une ou plusieurs des revendications 1 à 5, caractérisé en ce que la profondeur des évidements (24a, 24b) côté sortie est égale à env. 4/5 de l'épaisseur totale de la paroi (10 ; 110) du tamis.

7. Tamis selon une ou plusieurs des revendications 1 à 6, caractérisé en ce que la longueur, mesurée dans le sens de l'écoulement, des canaux d'ouverture (20 ; 120) du tamis, est au maximum égale à env. 1/10 de l'épaisseur totale de la paroi (10 ; 110) du tamis.

8. Tamis selon la revendication 7, caractérisé en ce que la longueur de canaux d'ouverture (20 ; 120) du tamis est comprise entre env. 5/100 et env. 7/100 de l'épaisseur totale de la paroi (10 ; 110) du tamis.

9. Tamis selon une ou plusieurs des revendications précédentes, caractérisé en ce que les évidements (24) côté sortie présentent chacun un alésage (24a) conique se raccordant au canal d'ouverture (20) du tamis, s'élargissant dans le sens d'écoulement (D), ainsi qu'un chanfrein (24b), se raccordant à cet alésage.
